# EUROPEAN PATENT APPLICATION

(11) **EP 4 498 464 A1**
(43) Date of publication of application: **29.01.2025**
(21) Application number: 23898347.2
(22) Date of filing: 30.11.2023
(51) Int. Cl.: H01M 10/04

(54) **ELECTRODE ASSEMBLY JOINING DEVICE, ELECTRODE ASSEMBLY MANUFACTURING DEVICE COMPRISING SAME, ELECTRODE ASSEMBLY JOINING METHOD, AND ELECTRODE ASSEMBLY MANUFACTURING METHOD**

(30) Priority: 02.12.2022 KR 20220166846; 24.11.2023 KR 20230165636
(71) Applicant: LG Energy Solution, Ltd., Seoul 07335 (KR)
(72) Inventor: CHOI, Jin Woo, Daejeon 34122 (KR); CHOI, Eun Seok, Daejeon 34122 (KR)
(74) Representative: Plasseraud IP
(86) International application number: PCT/KR2023/019590
(87) International publication number: WO 2024/117823

(57) **Abstract**

The present invention relates to an electrode assembly joining apparatus including a gripper configured to hold a part of a stack in which a plurality of positive electrodes and a plurality of negative electrodes are alternately stacked and separators are disposed between the plurality of positive electrodes and the plurality of negative electrodes, a press part configured to bond the stack, and a stack movement part configured to support the stack or move the stack partially.

## Description

### [Technical Field]

The present application claims priority to and the benefit of Korean Patent Application No. 10-2022-0166846 filed with the Korean Intellectual Property Office on December 2, 2022, and Korean Patent Application No. 10-2023-0165636 filed with the Korean Intellectual Property Office on November 24, 2023, the entire contents of which are incorporated herein by reference.

The present invention relates to an electrode assembly joining apparatus, an electrode assembly manufacturing apparatus including the same, an electrode assembly joining method, and an electrode assembly manufacturing method.

### [Background Art]

In general, a secondary battery refers to a battery that may be charged and discharged, unlike a primary battery that cannot be charged. The secondary batteries are widely used in cutting-edge electronic device fields such as phones, laptop computers, and camcorders.

The stability of the secondary battery may be ensured by performing a stability test that compresses one surface of the secondary battery with a pressing machine and then measures an internal short circuit.

Depending on shapes of battery casings, the secondary batteries are classified into a cylindrical or angular battery in which an electrode assembly is embedded in a cylindrical or angular metal battery casing, and a pouch-type battery in which an electrode assembly is embedded in a pouch-type battery casing provided in the form of a laminated aluminum sheet.

A process of manufacturing a stack-and-folding type electrode assembly in the related art is performed by bonding electrodes and separators by heating and pressing a stack made by stacking the electrodes and the separators. However, there is a problem in that the electrode is misaligned at the time of pressing the stack during the electrode assembly manufacturing process in the related art.

In order to solve the problem with the electrode assembly manufacturing process in the related art, the electrodes and the separators are heated and stacked, such that layers of the stack are simultaneously pressed, stacked, and bonded.

However, in the case of the electrode assembly manufactured by the electrode assembly manufacturing process, a bonding force of the electrode, which is stacked for the first time, is increased by a plurality of pressing processes, but a bonding force of the electrode, which is stacked for the last time, is comparatively low because the electrode, which is stacked for the last time, is pressed once by the single pressing process.

That is, in the case of the electrode assembly manufactured by the electrode assembly manufacturing process in the related art, the bonding forces are decreased in a stacking direction, which causes a limitation in ensuring the uniformity of the bonding forces of the electrode assembly.

### [Detailed Description of the Invention]

### [Technical Problem]

The present invention has been made in an effort to solve the above-mentioned problem in the related art, and an object of the present invention is to provide an electrode assembly manufacturing apparatus and method capable of preventing a level difference from occurring between surfaces of an electrode assembly because of double pressing.

### [Technical Solution]

An embodiment of the present invention provides an electrode assembly joining apparatus including a gripper configured to hold a part of a stack in which a plurality of positive electrodes and a plurality of negative electrodes are alternately stacked and separators are disposed between the plurality of positive electrodes and the plurality of negative electrodes, a press part configured to bond the stack, and a stack movement part configured to support the stack or move the stack partially.

Another embodiment of the present invention provides an electrode assembly joining method of joining an electrode assembly in which a positive electrode, a separator, and a negative electrode are stacked, the electrode assembly joining method including: a step (step a) of holding, by a gripper, a first portion of a stack including at least one first portion and at least one second portion adjacent to the first portion and configured such that the negative electrode, the positive electrode, and the separator are stacked; a first bonding step (step b) of bonding the negative electrode and the separator and bonding the positive electrode and the separator by heating and pressing, by a press part, the second portion where the gripper and the stack are not in contact; a step (step c) of supporting the stack or moving the stack partially by a stack movement part configured to support the stack or move the stack partially; and a second bonding step (step d) of bonding the negative electrode and the separator and bonding the positive electrode and the separator by heating and pressing, by the press part, the first portion that is not bonded in the first bonding step.

### [Advantageous Effects]

According to the electrode assembly joining apparatus and method according to the embodiment of the present invention, the electrodes may be bonded to the separators in the entire stack by the two bonding processes in the single chamber, thereby simplifying the electrode assembly joining process.

In addition, according to the present invention, the portion, which is doubly pressed during the two bonding processes, may be minimized, thereby preventing the occurrence of the non-pressed portion and minimizing the doubly pressed portion.

In addition, according to the present invention, it is possible to prevent a defect caused by a level difference in the height direction of the electrode assembly between the uppermost and lowermost portions of the electrode assembly by the non-pressed and doubly pressed portions.

In addition, according to the present invention, the bonding forces and ventilation degrees between the separators and the electrodes may be uniformized in the entire region of the electrode assembly, thereby improving the quality of the electrode assembly.

### [Brief Description of Drawings]

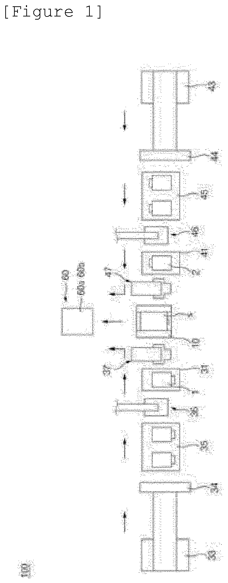

FIG. 1 is a top plan view illustrating an electrode assembly manufacturing apparatus according to an embodiment of the present invention.

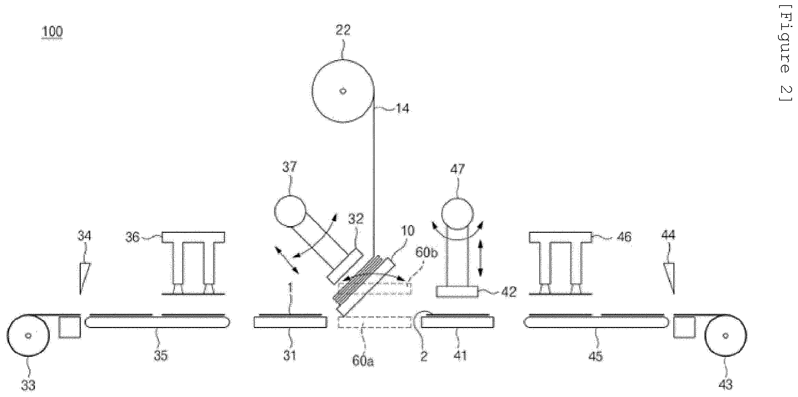

FIG. 2 is a cross-sectional view illustrating the electrode assembly manufacturing apparatus according to the embodiment of the present invention.

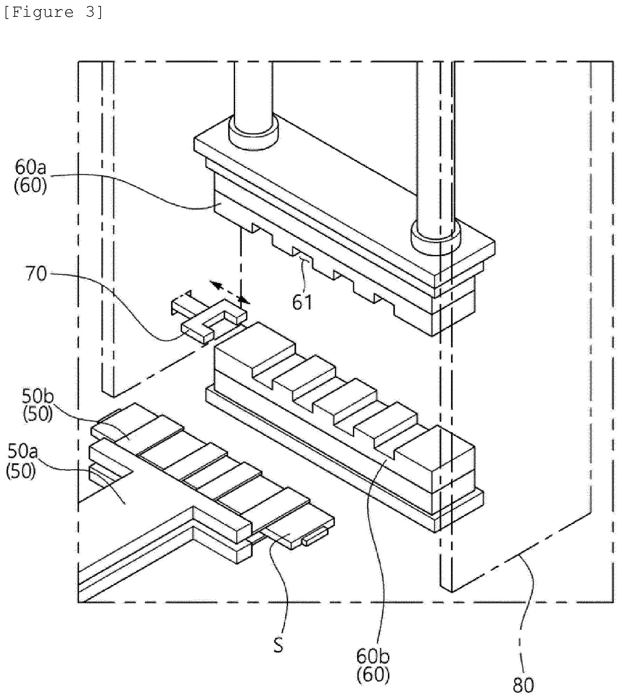

FIG. 3 is a perspective view illustrating an electrode assembly joining apparatus according to Example 1 of the present invention.
FIG. 4 is a perspective view illustrating an electrode assembly joining apparatus according to Example 2 of the present invention.

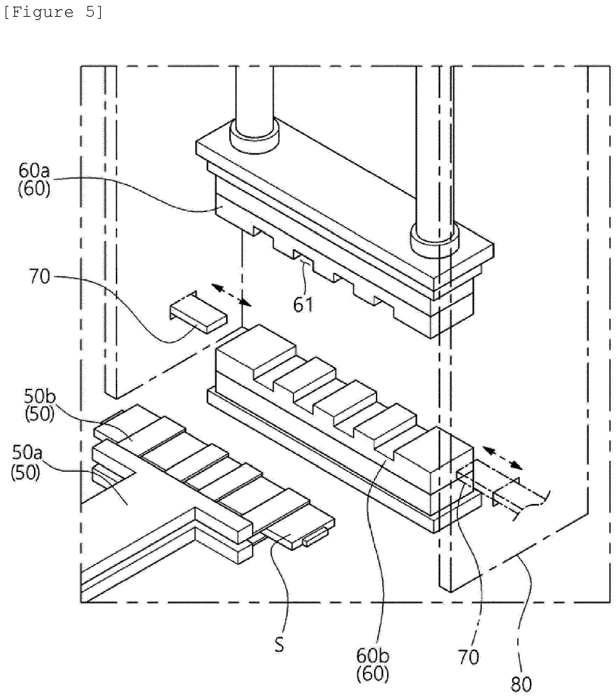

FIG. 5 is a perspective view illustrating an electrode assembly joining apparatus according to Example 3 of the present invention.
FIG. 6 is a perspective view illustrating an electrode assembly joining apparatus according to Example 4 of the present invention.
FIG. 7 is a perspective view illustrating an electrode assembly joining apparatus according to Example 5 of the present invention, the electrode assembly joining apparatus including a gripper having a finger part extending in a longitudinal direction of a stack.
FIG. 8 is a perspective view illustrating an electrode assembly joining apparatus according to Example 6 of the present invention, the electrode assembly joining apparatus including two grippers having finger parts extending in a longitudinal direction of a stack.

### [Explanation of Reference Numerals and Symbols]

100: Electrode assembly manufacturing apparatus
1: Negative electrode, First electrode
1a: Negative electrode tab
2: Positive electrode, Second electrode
2a: Positive electrode tab
4: Separator
10: Stack table
11: Table body
20: Separator supply part
22: Separator roll
30: First electrode supply part
31: First electrode seating table
32: First suction head
33: First electrode roll
34: First cutter
35: First conveyor belt
36: First electrode supply head
37: First movement part
40: Second electrode supply part
41: Second electrode seating table
42: Second suction head
43: Second electrode roll
44: Second cutter
45: Second conveyor belt
46: Second electrode supply head
47: Second movement part
50: Gripper
50a: Body part
50b: Finger part
51: First gripper
52: Second gripper
60: Press part
60a: First pressing block
60b: Second pressing block
61: Gripper groove
70: Stack movement part
80: Chamber
S: Stack

### [Best Mode]

The detailed description of the present invention is provided to completely explain the present invention to a person with ordinary skill in the art. Throughout the specification, unless explicitly described to the contrary, when one component "comprises (includes)" another component or "characterized by" having a certain structure and a certain shape, this means that other components, structures, and shapes may be included without being excluded.

The present invention may be variously modified and may have various embodiments, and specific embodiments will be described in detail in the detailed description. However, the description of the embodiments is not intended to limit the contents of the present invention, but it should be understood that the present invention is to cover all modifications, equivalents and alternatives falling within the spirit and technical scope of the present invention.

Hereinafter, the present invention will be described in detail with reference to the drawings. However, the drawings are intended to illustratively describe the present invention, and the scope of the present invention is not limited by the drawings.

An electrode assembly manufacturing apparatus 100 according to an embodiment of the present invention includes a stack table 10, a separator supply part 20, a first electrode supply part 30, a second electrode supply part 40, and a joining apparatus.

Further, in the present invention, a stack S means a structure in which a plurality of negative electrodes 1, a plurality of separators 4, and a plurality of positive electrodes 2 are stacked. The electrode assembly means a structure in which the negative electrodes 1 and the separators 4 are bonded and fixed by heating and pressing the stack S and the positive electrode 2 and the separator 4 are bonded and fixed by heating and pressing the stack S.

That is, a structure in which a single negative electrode and a single positive electrode are stacked with a separator interposed therebetween may be referred to as a unit cell. An assembly in which a plurality of unit cells is stacked by being separated by the separators may be referred to as a stack. The unit cell may be a combination of various shapes such as a mono-cell, a bi-cell, and a half-cell.

The negative electrodes 1 (or first electrodes), the separators 4, and the positive electrodes 2 (or second electrodes) are alternately supplied and stacked onto one surface of the stack table 10, such that the stack S made by stacking the separators 4, the plurality of first electrodes 1, and the plurality of second electrodes 2 is mounted on one surface of the stack table 10. In the embodiment, the first electrodes 1, the separators 4, and the second electrodes 2 may be stacked in such a way that the separators 4 are folded in a zigzag manner, and the first electrodes 1 and the second electrodes 2 are alternately disposed between the folded separators 4.

That is, the stacks may be stacked by a zigzag-stacking method. However, the stacks may be stacked by a stack-and-folding method or a lamination-and-stacking method.

The first electrode 1 and the second electrode 2, which are supplied to the stack table 10, may be stacked on the stack table 10 while the stack table 10 rotates. Therefore, the electrode assembly manufacturing apparatus 100 according to the present invention may further include a rotation part (not illustrated) configured to rotate the stack table 10.

Furthermore, the stack may be manufactured in various shapes by a combination of a rotational operation, a swing operation, or a horizontal movement operation of the stack table and a rotational operation, a swing operation, or a horizontal movement operation of the separator supply part.

In the electrode assembly manufacturing apparatus 100 according to the present invention, the first electrode supply part 30 may be positioned at one side of the stack table 10, and the second electrode supply part 40 may be positioned at the other side of the stack table 10. In this case, the rotation part may rotate the stack table 10 alternately in a direction toward the first electrode supply part 30 and a direction toward the second electrode supply part 40.

For example, the separator supply part 20 may be positioned on an upper portion of the stack table 10, i.e., positioned in the stacking direction of the stack S. The first electrode supply part 30 may be positioned at the left side based on the stacking direction of the stack S, and the second electrode supply part 40 may be positioned at the right side based on the stacking direction of the stack S.

The separator 4 may be supplied and mounted onto the stack table 10. When the rotation part rotates the stack table leftward, the first electrode may be supplied to one surface of the separator 4. Further, the rotation part may rotate the stack table 10 rightward at the same time when the separator 4 is supplied. In this case, the separator 4 may cover a lower surface, a right surface, and an upper surface of the first electrode 1, and the second electrode 2 may be supplied to the upper surface of the first electrode 1 on which the separator 4 is positioned.

When the process is repeated, the separators 4 may be provided to be alternately opened at left and right sides thereof for each layer.

The separator supply part 20 may supply the separator 4 to the stack table 10.

The separator supply part 20 may be provided in the form of a separator roll around which the separators 4 are wound. In this case, the separator 4 wound around a separator roll 22 may be supplied to the stack table 10 while being gradually unwound. For example, the separator supply part 20 may be positioned above the stack table 10.

The first electrode supply part 30 may supply the first electrode 1 to the stack table 10 and stack the first electrode 1 on the stack table 10.

The first electrode supply part 30 may include a first electrode seating table 31 on which the first electrode 1 is seated before the first electrode 1 is stacked on the stack table 10.

Further, the first electrode supply part 30 may further include a first electrode roll 33, a first cutter 34, a first conveyor belt 35, and a first electrode supply head 36.

The first electrode supply part 30 may supply the first electrode 1 to the first electrode seating table 31 by gradually unwinding the first electrode 1 wound in the form of a sheet around the first electrode roll 33. The first cutter 34 may cut the first electrode 1, which is supplied from the first electrode roll 33, into a preset length.

The first electrode 1, which is cut by the first cutter 34, may be supplied to the first conveyor belt 35, and the first conveyor belt 35 may move the first electrode 1 to the first electrode seating table 31. Further, the first electrode supply head 36 may vacuum-suck the first electrode 1 mounted on the first conveyor belt 35 and seat the first electrode 1 on the first electrode seating table 31.

In this case, the first cutter 34 may cut the first electrode 1, which is provided in the form of a sheet, so that a first electrode tab 1a protrudes from an end of the first electrode 1.

Further, the first electrode supply part 30 may include a first suction head 32 and a first movement part 37.

The first suction head 32 may vacuum-suck the first electrode 1 seated on the first electrode seating table 31. The first suction head 32 includes a vacuum suction port (not illustrated) provided on a bottom surface thereof, such that the first suction head 32 may suck the first electrode 1 through a vacuum suction port and fix the first electrode 1 to the bottom surface of the first suction head 32. In this case, the first suction head 32 may have therein a passageway that connects the vacuum suction port and a vacuum suction device (not illustrated).

The first movement part 37 may move the first suction head 32 to the stack table 10 so that the first suction head 32 may stack the first electrode 1, which is seated on the first electrode seating table 31, on the stack table 10.

The second electrode supply part 40 may supply the second electrode 2 to the stack table 10 and stack the second electrode 2 on the stack table 10.

The second electrode supply part 40 may include a second electrode seating table 41 on which the second electrode 2 is seated before the second electrode 2 is stacked on the stack table 10.

Further, the second electrode supply part 40 may further include a second electrode roll 43 around which the second electrode 2 is wound in the form of a sheet, a second cutter 44 configured to form the second electrode 2 having a predetermined size by cutting the second electrode 2 at a predetermined interval when the second electrode 2 wound in the form of a sheet around the second electrode roll 43 is unwound and supplied, a second conveyor belt 45 configured to move the second electrode 2 cut by the second cutter 44, and a second electrode supply head 46 configured to vacuum-suck the second electrode 2, which is conveyed by the second conveyor belt 45, and seat the second electrode 2 on the second electrode seating table 41.

In this case, the second cutter 44 may cut the second electrode 2, which is provided in the form of a sheet, so that a second electrode tab 2a protrudes from an end of the second electrode 2.

Further, the second electrode supply part 40 may include a second suction head 42 configured to vacuum-suck the second electrode 2 seated on the second electrode seating table 41, and a second movement part 47 configured to move the second suction head 42 to the stack table 10 so that the second suction head 42 may stack the second electrode 2, which is seated on the second electrode seating table 41, on the stack table 10.

Further, the second suction head 42 may include a vacuum suction port (not illustrated) provided on a bottom surface, on which the second electrode 2 is seated, and configured to suck air so that the second electrode 2 is fixed to the bottom surface of the second suction head 42.

In this case, the rotation part according to the embodiment of the present invention may rotate the stack table 10 so that the stack table 10 faces the first suction head 32 at the time of stacking the first electrode 1. The rotation part may rotate the stack table 10 so that the stack table 10 faces the second suction head 42 at the time of stacking the second electrode 2.

### <Example 1>

The electrode assembly joining apparatus according to the present invention includes a gripper 50, a press part 60, and a stack movement part 70. Further, the press part 60 and the stack movement part 70 may be positioned in a chamber 80. Therefore, the stack S may be moved and bonded in the single chamber 80.

In this case, the chamber 80 may mean a single imaginary space or be a device that provides a physically closed space. Furthermore, the chamber 80 may be a device that provides a physical space, but the chamber 80 may be in an opened state.

The electrode assembly joining apparatus may perform two bonding processes to bond the first electrode 1 and the second electrode 2 to the separator 4 in an overall area of the stack S. Therefore, the stack S may include a portion bonded by a first bonding process, and a portion bonded by a second bonding process.

The stack stacked on the stack table is in a state in which the electrodes and the separators are simply stacked without being bonded yet. Therefore, in order to press the stack by the press part, it is necessary to provide a means configured to hold the stack and maintain the alignment of the stack during the pressing process.

Specifically, in the electrode assembly joining apparatus, the press part 60 may bond the stack S in the state in which the gripper 50 holds the stack S. Further, the stack S may include a first portion and a second portion.

For example, assuming that first portions and second portions are alternately disposed repeatedly in a longitudinal direction of the stack S, the press part 60 may bond the second portion in the state in which the gripper 50 holds the first portion, and when the gripper 50 holds the second portion, the press part 60 may bond the first portion.

In the embodiment, the gripper 50 may include a body part 50a and finger parts 50b. The finger parts 50b may protrude from the body part 50a and be provided as at least one pair of finger parts 50b.

The body part 50a may have guide grooves (not illustrated) in which the finger parts 50b may move vertically. In this case, the vertical movement means a movement along an axis parallel to the stacking direction of the plurality of first electrodes 1, the plurality of separators 4, and the plurality of second electrodes 2 of the stack S.

One of the pair of finger parts 50b may come into contact with an upper surface of the stack S, and the other of the pair of finger parts 50b may come into contact with a lower surface of the stack S and hold the stack S.

The stack S includes the first portion and the second portion. In case that the gripper 50 includes the pair of finger parts 50b, the first and second portions may be disposed adjacent to each other.

In case that the gripper 50 includes two or more pairs of finger parts 50b, each pair of finger parts 50b may be positioned to be spaced apart from each other, and the second portion may be disposed between the first portions. That is, the first and second portions may be alternately disposed.

Further, in the electrode assembly joining apparatus, the press part 60 may heat the stack S or heat and press the stack S in the state in which the gripper 50 holds the stack S.

The press part 60 may include a pair of pressing blocks 60a and 60b. In the embodiment, the press part 60 may include a first pressing block 60a configured to heat the upper surface of the stack S or heat and press the upper surface of the stack S, and a second pressing block 60b configured to heat the lower surface of the stack S or heat and press the lower surface of the stack S.

The press part 60 may further include gripper grooves 61, in which the finger parts 50b may be positioned, so that the press part 60 and the finger parts 50b do not come into direct contact with one another when the press part 60 presses the stack. In other words, at least one of the pair of pressing blocks 60a and 60b may include the gripper grooves 61.

The gripper groove 61 may have the same width and height as the finger part 50b, or the gripper groove 61 may have a larger width and height than the finger part 50b.

In this case, the first portion may be a portion of the stack S that is bonded for the second time, and the second portion may be a portion that is bonded for the first time. The bonding process is performed to bond the first and second electrodes 1 and 2 to the separator 4 in the stack S as the press part 60 heats the stack S or heats and presses the stack S.

In other words, during the first bonding process, the first portion may be held by the finger parts 50b, and the second portion may be heated or heated and pressed by the press part 60. Further, during the second bonding process, the first portion may be heated or heated and pressed by the press part 60, and the second portion may be held by the finger parts 50b.

The stack movement part 70 may move the stack S partially in a state in which the gripper 50 releases the stack S.

Specifically, a method of joining electrode assemblies by using the electrode assembly joining apparatus bonds the first and second electrodes 1 and 2 of the second portion to the separator as the pair of press parts 60 heats and presses the stack S in the state in which the gripper 50 holds the first portion of the stack S. That is, the stack S is bonded primarily.

Further, the press part 60 releases the stack S, and the gripper 50 releases the stack S. In this case, the stack S may be supported by the lower finger part 50b of the gripper 50, or the gripper 50 may stack the stack S on the second pressing block 60b and then release the stack S.

Thereafter, the stack movement part 70 may move the stack S horizontally. Further, the gripper 50 may hold the second portion of the stack S, and the press part 60 may heat and press the first portion of the stack S.

In this case, the stack movement part 70 may move the stack S by a width of the finger part 50b. That is, the stack movement part 70 may move the stack S so that the second portion moves to a position corresponding to the gripper groove 61.

Further, the horizontal movement means a movement in a direction perpendicular to the vertical movement. In other words, the horizontal movement means the longitudinal direction of the stack S.

Meanwhile, the operation of the gripper 50, which holds the stack S again, may be omitted because the second portion of the stack is in a state in which the separator and the electrode are already bonded when the first portion, in which the stack is not bonded yet, is heated or heated and pressed by the press part 60.

That is, most parts of the stack S may be fixed by primarily bonding the stack S. Then, the press part 60 may secondarily bond the stack in a state in which the gripper 50 does not hold the stack S during the secondary bonding process.

### <Example 2>

In the state in which the stack movement parts 70 support the stack S, the gripper 50 may release the stack S and move partially.

In this case, the stack movement parts 70 may be provided as a pair of stack movement parts 70 to support the stack S. In other words, the stack movement parts 70 may be respectively positioned at two inner sides of the chamber 80 that face each other.

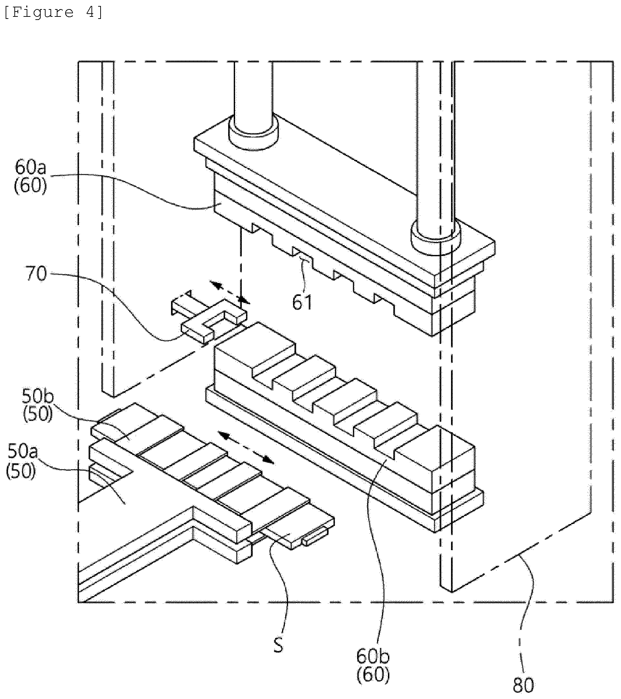

For example, the stack movement parts 70 may move in the horizontal direction. That is, as illustrated in FIG. 4, the stack movement part 70 may be extended or retracted horizontally relative to a wall surface of the chamber.

In a state in which the stack movement part 70 is moved horizontally and then supports a lower surface of an edge of the stack S, the gripper 50 may move horizontally and then hold the stack again.

After the pair of press parts 60 bonds the separator 4 and the electrodes 1 and 2 in the second portion, the press parts 60 release the stack S, and the pair of stack movement parts 70 protrudes in the direction in which the pair of stack movement parts 70 faces each other, and then the pair of stack movement parts 70 prepares to support the stack S.

Further, when the gripper 50 seats the stack S on the stack movement part 70 and then releases the stack S, the stack movement part 70 moves horizontally and moves the stack S by the width of the finger part 50b. Next, the gripper 50 may hold the second portion of the stack.

Thereafter, the pair of press parts 60 may heat and press the first portion.

Meanwhile, in Example 2, the stack movement part 70 moves the stack S horizontally while moving horizontally. As a modified example, in a state in which the stack movement part 70 simply supports the two opposite ends of the stack based on the longitudinal direction, the gripper 50 may move horizontally and hold the second portion.

That is, in the modified example, the stack movement part 70 merely supports the stack S, and the gripper 50 may move horizontally and hold the stack S again.

### <Example 3>

As another embodiment according to the present invention, another embodiment in which the gripper 50 moves horizontally will be described.

The gripper 50 may move horizontally in the longitudinal direction of the stack S, and a movement distance may be equal to the width of the finger part 50b.

After the pair of press parts 60 bonds the separator 4 and the electrodes 1 and 2 in the second portion, the press part 60 releases the stack S, and the gripper 50 moves horizontally and moves the stack S partially. Thereafter, the gripper 50 releases the stack S and seats the stack S on the second pressing block 60b.

Further, the gripper 50 may move horizontally in a direction opposite to the direction of the horizontal movement of the stack S and then hold the stack S again.

When the gripper 50 holds the second portion of the stack S, the finger part 50b may be inserted into the gripper groove 61. That is, for example, the gripper 50 may return to the initial position by two horizontal movements including a rightward horizontal movement and a leftward horizontal movement.

In this case, in the electrode assembly joining apparatus according to the present embodiment, the stack movement part 70 may be excluded because the second pressing block 60b serves to support the stack.

Meanwhile, after the gripper 50 holds the stack and moves the stack S partially while moving horizontally, the gripper 50 may seat the stack S on the stack movement part 70 instead of an upper surface of the second pressing block 60b.

### <Example 4>

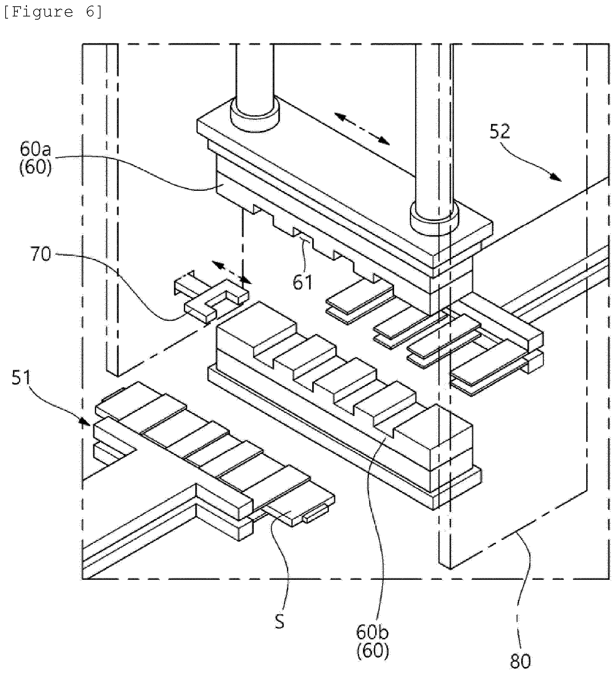

With reference to FIG. 6, the chamber 80 may have a pair of two opposite sides that face each other and penetrate the chamber 80, and the grippers 50 may be respectively positioned at the penetrating sides. Specifically, a first gripper 51 and a second gripper 52 may be respectively positioned at the sides of the chamber 80 that face each other and respectively and sequentially hold the first portion and the second portion.

In this case, the press part 60 may move horizontally and partially move horizontally.

For example, the first gripper 51 holds the first portion, and the press part 60 heats the second portion or heats and presses the second portion. Further, after the press part 60 releases the stack S, the second gripper 52 holds the second portion. After the first gripper 51 releases the stack and then is removed from the inside of the chamber 80, the press part 60 may move partially and heat the first portion or heats and presses the first portion.

One of the pair of finger parts 50b in Examples 1 to 4 may be provided in the form of an integrated flat plate. That is, one of the pair of finger parts 50b may be provided in the form of a flat plate having an area corresponding to an upper or lower surface of the stack S.

For example, in case that the finger part 50b is divided into lower and upper finger parts, the lower finger part may be provided in the form of an integrated flat plate on which the stack may be placed entirely, and the upper finger part may have a structure having a plurality of separated branches.

Further, the finger part 50b, which is provided in the form of a flat plate, may be made of a material having high thermal conductivity.

Further, one of the pair of pressing blocks 60a and 60b, which presses the finger part 50b provided in the form of a flat plate, may also be provided in the form of a flat plate. That is, the pressing block, which presses the finger part 50b provided in the form of a flat plate, may exclude the gripper groove 61.

In Examples 1 to 4, at least one pair of finger parts 50b may be arranged in the longitudinal or width direction of the stack.

For example, in case that the finger parts 50b are provided as a pair of finger parts 50b, when the finger part 50b holds the first portion, the remaining region of the stack may be the second portion. In case that the finger parts 50b are provided as a plurality of pairs of finger parts 50b spaced apart from one another, the region, which is held by the finger parts 50b, may be the first portion, and a portion between the finger parts 50b may be the second portion.

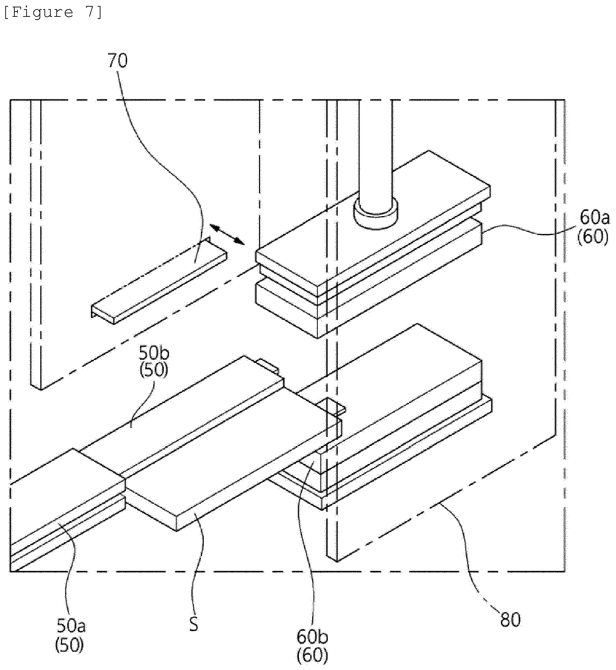

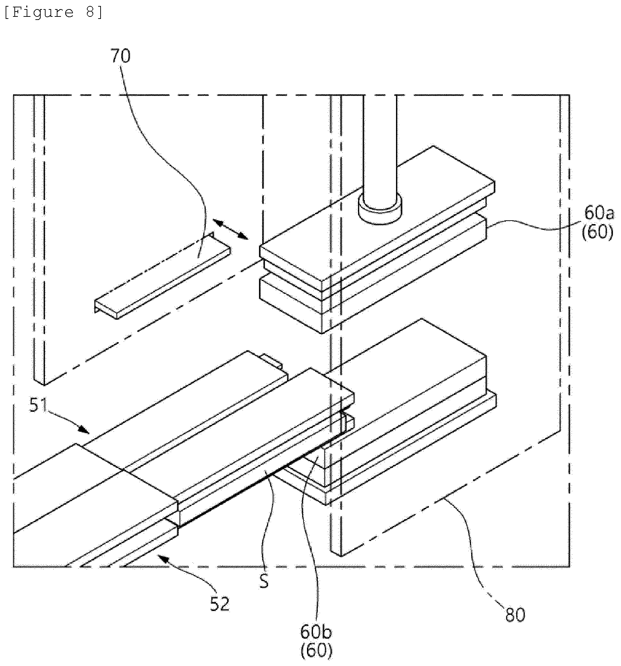

FIGS. 7 and 8 illustrate a case in which the gripper 50 holds the stack S in the longitudinal direction of the stack S.

With reference to Example 5 of the present invention in FIG. 7, the gripper 50, 50a, or 50b includes a pair of finger parts extending in the longitudinal direction of the stack S.

With reference to FIG. 7, the electrode assembly joining apparatus of the present embodiment may be configured with reference to Examples 1 to 4, except that only the pair of finger parts 50b is provided and holds the stack S in the longitudinal direction.

In the electrode assembly joining apparatus illustrated in FIG. 7, in the state in which the gripper 50 holds the first portion of the stack S, the press part 60 heats or heats and presses the second portion that is not held by the gripper 50.

The stack movement part 70 primarily bonds the separator 4 and the electrodes 1 and 2 in the second portion and moves the stack S partially. Next, when the stack S is moved horizontally by the stack movement part 70 or the gripper, the gripper 50 holds the stack S again, and the press part 60 heats the first portion or heats and presses the first portion.

As still another embodiment, the electrode assembly joining apparatus according to Example 6 in FIG. 8 has two grippers, as in Example 4.

In the electrode assembly joining apparatus in FIG. 8, in the state in which the first gripper 51 holds the first portion of the stack S, the press part 60 heats or heats and presses the second portion that is not held by the first gripper 51.

In the state in which the first gripper 51 holds the stack S, the second gripper 52 holds the second portion. Thereafter, the first gripper 51 releases the stack S.

Further, the press part 60 may move partially and heat the first portion or heat and presses the first portion.

In the electrode assembly joining apparatus in FIG. 8, the first gripper 51 and the second gripper 52 may be disposed in parallel at the same side with respect to the chamber 80.

The width of the finger part 50b may be 1/5 to 4/5 of a width of the stack S. Specifically, one or more pairs of finger parts 50b include the upper finger part configured to come into contact with the upper surface of the stack S, and the lower finger part configured to come into contact with the lower surface of the stack S. A total sum of the width of any one of the upper and lower finger parts may be 1/5 to 4/5 of the width of the stack S.

In particular, a total sum of the width of the finger part 50b may be 1/5 to 3/5 of the width of the stack S, more particularly 1/5 to 2/5 of the width of the stack S.

The press part 60 may further include a press heater (not illustrated) configured to heat the pair of pressing blocks 60a and 60b, and the pair of pressing blocks 60a and 60b may heat and press the stack S including the negative electrode 1, the separator 4, and the positive electrode 2. Therefore, the thermal bonding between the negative electrode 1, the separator 4, and the positive electrode 2 may be more properly performed when the press part 60 presses the stack S, such that more secure bonding may be performed.

Meanwhile, the press part 60 may further include an induction heating heater, which heats the stack in a noncontact manner, as the press heater. That is, the press heater may further include an induction heating heater that is embedded with a contact heater configured to directly heat the pressing block and does not come into contact with the stack.

The press heater may directly heat the pressing block, and the heating block may heat the stack while coming into direct contact with the stack. In contrast, the induction heating heater heats a central portion of the stack by heating a core of the stack, i.e., a middle portion, which is a target, by magnetic field induction heating. As a result, the central portion of the stack is heated by induction heating, and the upper and lower ends of the stack are heated by the heated pressing block, such that the stack may be heated entirely uniformly. The heating uniformity improves the uniformity of the bonding force of the stack and the uniformity of the ventilation.

An area in which the press part 60 presses the stack S may be 30 to 70% based on an overall area of 100% of one surface of the stack S. In particular, a pressing area of any one the pair of pressing blocks 60a and 60b may be 40 to 70% based on the overall area of 100% of one surface of the stack S. In this case, one surface of the stack S may be any one of uppermost and lowermost surfaces of the stack S pressed by the press part 60.

A value made by summing up a total sum of the area of the finger part 50b and a total sum of an area excluding the gripper groove 61 of the press part 60 may be equal to an area of the upper or lower surface of the stack S or larger than an area of the upper or lower surface of the stack S.

Further, the total sum of the area, which excludes the gripper groove 61 of the press part 60, may be equal to the total sum of the area of the finger part 50b or larger than the total sum of the area of the finger part 50b.

In particular, the total sum of the area, which excludes the gripper groove 61 of the press part 60, may be larger than the total sum of the area of the finger part 50b. In other words, an area of the second portion may be larger than an area of the first portion.

Therefore, a part of the stack S may be pressed doubly. In this case, a doubly pressed portion may be equal to or smaller than 1/6 of the area of the stack S.

A double pressing region of the press part 60 may be minimized, a height difference caused by the double pressing may be minimized, and the occurrence of a non-pressed region may be prevented. Therefore, the bonding forces between the negative electrode and the separator and between the positive electrode and the separator may be uniformized, and the safety of the secondary battery may be improved.

Further, when the doubly pressed portion exceeds the range or the electrode assembly includes a non-pressed portion, a level difference, which may be identified visually, occurs between the uppermost and lowermost surfaces of the electrode assembly. When the electrode assembly having a pouch-type casing with the above-mentioned level difference is accommodated and sealed, the casing also has a level difference, which causes a defect.

The electrode assembly joining apparatus according to the present invention may further include a controller (not illustrated).

The controller may control any one or more of a position of the gripper 50 for holding the stack S, a press position of the press part 60 for pressing the stack S, and an operation of the stack movement part 70.

For example, the controller may control a movement distance of the stack movement part 70 on the basis of data related to areas of the first and second portions, points at which the end of the gripper 50 and the end of the press part 60 are positioned, and points at which the ends of the pair of stack movement parts 70 are positioned.

The electrode assembly joining apparatus according to the present invention may further include a calculation part (not illustrated). The calculation part may receive data related to the width of the stack S from a user or store a database related to standard sizes of the stack S or the electrode assembly.

The calculation part may calculate a movement distance of the stack movement part 70, a position of the gripper 50, and a position of the press part 60 on the basis of data related to the size and width of the stack S or the electrode assembly. That is, the calculation part may calculate the width of the gripper 50 and the areas or widths of the first and second portions. Further, the calculation part may calculate the positions at which one end of the gripper 50 and one end of the press part 60 are positioned.

On the basis of the area of the first portion, the calculation part may calculate the movement distance of the stack movement part 70 or the stack S and calculate the positions at which one end of the gripper 50 and one end of the press part 60 are positioned.

The electrode assembly manufacturing method according to the present invention includes an electrode assembly joining method. Specifically, the electrode assembly manufacturing method includes a step of manufacturing the stack including the negative electrode, the positive electrode, and the separator disposed between the negative electrode and the positive electrode, and an electrode assembly joining step (or method).

The electrode assembly joining step includes a step (step a) of holding, by the gripper, the first portion of the stack, a first bonding step (step b), a step (step c) of supporting the stack or moving the stack partially, and a second bonding step (step d).

In step a, the stack is in a state in which the positive electrode and the separator are not bonded to each other and the negative electrode and the separator are not bonded to each other.

That is, in the step of manufacturing the stack, the positive electrode and the separator are disposed in the state in which the positive electrode and the separator are not bonded to each other, and the negative electrode and the separator are disposed in the state in which the negative electrode and the separator are not bonded to each other.

Therefore, in order to prevent the stack from being misaligned by the press part in step b of bonding the positive electrode and the separator and bonding the negative electrode and the separator, the press part may heat and press the stack fixed by the gripper.

Detailed steps of step c may be different from one another depending on the electrode assembly joining apparatus according to Examples 1 to 4 described above.

Step c may include a step of releasing the stack by the gripper, a step of moving the stack horizontally by the stack movement part, and holding the stack again by the gripper.

Alternatively, step c may include a step of supporting the stack by the stack movement part, a step of releasing the stack by the gripper, and a step of moving the gripper horizontally and holding the stack again.

Alternatively, step c may include a step of releasing the stack by the gripper and supporting the stack by the first press part, a step of moving the stack horizontally by the stack movement part, and a step of moving the stack by the gripper in the direction opposite to the direction of the horizontal movement and holding the stack again.

Alternatively, step c may include a step of holding the stack by the second gripper in the direction opposite to the first gripper in the state in which the first gripper holds the stack, a step of releasing the stack by the first gripper, and a step of moving the press part horizontally.

In step c, a partial movement distance of the stack may be at least equal to a width of one finger part of the gripper. In other words, the stack may include the first portion held by the gripper in step a, and the second portion bonded in step b. A width of the second portion may be larger than a width of the first portion. A partial movement distance of the stack may be the width of the first portion or the width of the second portion.

Steps a to d may be performed in the single chamber. The gripper may be positioned outside the chamber or moved to the outside of the chamber. However, the operation of holding the stack or holding the stack again by the gripper may be performed in the chamber.

Because the electrode assembly joining step is performed in the single chamber, the electrode assembly joining process may be simplified, and the process time may be reduced, and the economical effect may be implemented.

In step b and d, the bonding areas may not overlap one another or a minimum double bonding area may be included. The double pressing does not occur and the minimum double pressing occurs, such that a level difference in height of the electrode assembly does not occur, which may reduce a defect rate of the secondary batteries.

The electrode assembly joining step according to the present invention may further include a calculation step of calculating the movement distance of the stack movement part and the areas of the first and second portions, and a control step of controlling any one or more of the fixing positions of the fixing parts and the pressing positions of the press parts on the basis of the calculated movement distance of the stack movement part and the areas of the first and second portions.

For example, the calculation step may calculate the area of the first portion bonded in step b and the area of the second portion bonded in step d, and then calculate a width of the stack that needs to be held by the gripper so that the first and second portions overlap each other minimally or calculate a width of the stack that needs to be pressed by the press part. The control step may move the gripper and the press part on the basis of the width calculated in the calculation step.

The description of the electrode assembly manufacturing method, except for the above-mentioned description, may be replaced with the description of the electrode assembly manufacturing apparatus 100.

While the present invention has been described above with reference to the exemplary embodiments, it may be understood by those skilled in the art that the present invention may be variously modified and changed without departing from the spirit and scope of the present invention disclosed in the claims.

## Claims

1. An electrode assembly joining apparatus comprising:
a gripper configured to hold a part of a stack in which a plurality of positive electrodes and a plurality of negative electrodes are alternately stacked and separators are disposed between the plurality of positive electrodes and the plurality of negative electrodes;
a press part configured to bond the stack; and
a stack movement part configured to support the stack or move the stack partially.

2. The electrode assembly joining apparatus of claim 1, wherein the stack comprises first and second portions,
wherein the press part bonds the second portion in a state in which the gripper holds the first portion, and
wherein the press part bonds the first portion in a state in which the gripper holds the second portion.

3. The electrode assembly joining apparatus of claim 2, wherein the stack movement part moves the stack partially in a state in which the gripper releases the stack, or
wherein in a state in which the stack movement part supports the stack, the gripper releases the stack, the stack movement part moves partially, and the gripper holds the stack again.

4. The electrode assembly joining apparatus of claim 1, further comprising:
a controller configured to control any one or more of a position at which the gripper holds the stack, a position at which the press part bonds the stack, and an operation of the stack movement part.

5. The electrode assembly joining apparatus of claim 1, wherein the press part bonds the positive electrode and the negative electrode to the separator in the stack by heating and pressing the stack.

6. The electrode assembly joining apparatus of claim 1, wherein the press part and the stack movement part are disposed in a single chamber.

7. The electrode assembly joining apparatus of claim 2, wherein the gripper comprises:
a body part; and
one or more pairs of finger parts protruding from the body part,
wherein the press part bonds the second portion when the finger parts hold the first portion, and
wherein the press part bonds the first portion when the finger parts hold the second portion.

8. The electrode assembly joining apparatus of claim 7, wherein the first portion is provided as a plurality of first portions disposed in a longitudinal direction of the stack, the second portion is disposed between the first portions, and the finger parts hold the first portions in a width direction of the stack.

9. The electrode assembly joining apparatus of claim 7, wherein at least one first portion is disposed in a width direction of the stack, the second portion is disposed adjacent to the first portion, and the finger parts hold the first portion in a longitudinal direction of the stack.

10. The electrode assembly joining apparatus of claim 2, wherein the gripper moves horizontally.

11. The electrode assembly joining apparatus of claim 10, wherein the gripper moves the stack partially and then releases the stack, and
wherein the gripper moves horizontally in a direction opposite to the movement direction of the stack and then holds the stack again.

12. An electrode assembly manufacturing apparatus comprising:
the electrode assembly joining apparatus according to any one of claims 1 to 11;
a separator supply part configured to supply the separator;
a first electrode supply part configured to supply the positive electrode;
a second electrode supply part configured to supply the negative electrode; and
a stack table on which the stack configured by stacking the separator, the positive electrode, and the negative electrode is placed.

13. An electrode assembly joining method of joining an electrode assembly in which a positive electrode, a separator, and a negative electrode are stacked, the electrode assembly joining method comprising:
a step (step a) of holding, by a gripper, a first portion of a stack including at least one first portion and at least one second portion adjacent to the first portion and configured such that the negative electrode, the positive electrode, and the separator are stacked;
a first bonding step (step b) of bonding the negative electrode and the separator and bonding the positive electrode and the separator by heating and pressing, by a press part, the second portion where the gripper and the stack are not in contact;
a step (step c) of supporting the stack or moving the stack partially by a stack movement part configured to support the stack or move the stack partially; and
a second bonding step (step d) of bonding the negative electrode and the separator and bonding the positive electrode and the separator by heating and pressing, by the press part, the first portion that is not bonded in the first bonding step.

14. The electrode assembly joining method of claim 13, wherein in step a, the stack is in a state in which the positive electrode and the separator are not in contact with each other and the negative electrode and the separator are not in contact with each other.

15. The electrode assembly joining method of claim 13, wherein step c comprises:
supporting the stack by the stack movement part;
releasing the stack by the gripper; and
moving the gripper horizontally and holding the stack again.

16. The electrode assembly joining method of claim 13, wherein step c comprises:
releasing the stack by the gripper;
moving the stack horizontally by the stack movement part; and
holding the stack again by the gripper.

17. The electrode assembly joining method of claim 13, wherein steps a to d are performed in a single chamber.

18. An electrode assembly manufacturing method comprising:
the electrode assembly joining method according to any one of claims 13 to 17,
wherein the electrode assembly manufacturing method further comprises manufacturing the stack including the negative electrode, the positive electrode, and the separator disposed between the negative electrode and the positive electrode.
